# EUROPÄISCHE PATENTANMELDUNG

(11) **EP 1 956 413 A2**
(43) Veröffentlichungstag der Anmeldung: **13.08.2008**
(21) Anmeldenummer: 08000050.8
(22) Anmeldetag: 03.01.2008
(51) Int. Cl.: G02B 27/01, G02B 5/32, G02F 1/137

(54) **Holographisches Informations-Display**

(30) Priorität: 09.02.2007 DE 102007007162
(71) Anmelder: GM Global Technology Operations, Inc., Detroit, MI 48265-300 (US)
(72) Erfinder: Brandt, Peter, 63739 Aschaffenburg (DE); Charle, Heiko, 65428 Rüsselsheim (DE); Krüger, Sven, 10245 Berlin (DE); Sahlbom, Daniel, 46492 Mellerud (DE); Hendricks, Ulrich, 71126 Gäufelden (DE)
(74) Vertreter: Strauss, Peter

(57) **Zusammenfassung**

Die Erfindung betrifft ein holographisches Informationsdisplay für ein Kraftfahrzeug zum Profizieren eines virtuellen Anzeigenelements. Eine Datenverarbeitungseinrichtung (9) stellt ein Hologramms für das zu profizierende virtuelle Anzeigenelement bereit. Eine Steuereinrichtung (5) gibt für eine Mehrzahl von Ausschnitten des Hologramms jeweils ein individuelles Steuersignal aus. Eine Mehrzahl durch die Steuereinrichtung (5) individuell einstellbare optische Phasenverzögerungszellen, die auf einer von dem Lichtstrahl ausgeleuchteten Fläche angeordnet sind, verzögern den jeweils auf sie einfallenden Anteil des Lichtstrahls in der Phase ansprechend auf das jeweilige individuelle Steuersignal.

## Beschreibung

Die vorliegende Erfindung betrifft ein holographisches Informations-Display (HID), das in oder für ein Fahrzeug zum Projizieren eines Bildes eingesetzt wird. Zudem betrifft die Erfindung ein Verfahren zum Projizieren des virtuellen Anzeigenelements unter Verwendung des erfindungsgemäßen holographischen Informations-Displays.

Mittels Headup-Informations-Displays (HUD) können dem Führer eines Kraftfahrzeuges Informationen in die Windschutzscheibe eingeblendet werden, welche der Führer des Kraftfahrzeuges möglicherweise benötigt. Das Headup-Informations-Display beinhaltet einen Projektor und eine Mehrzahl von Linsen und/oder Spiegelelementen, insbesondere diffraktive Optiken als Korrekturlinsen, um ein verzerrungsfreies Bild in virtueller Distanz auf die Windschutzscheibe zu projizieren, vgl. DE 103 44 688 A1. Der hierfür notwendige optische Aufbau, einschließlich der Korrekturelemente, die an vielfältig unterschiedlich geformte Windschutzscheiben angepasst werden müssen, erschweren die Implementierung und Einrichtung von Headup-Informations-Displays in Kraftfahrzeugen.

Die Aufgabe der vorliegenden Erfindung besteht darin, ein Projektionssystem für Informationen bereitzustellen, das sich einfach in einem Kraftfahrzeug und verschiedenen Typen von Kraftfahrzeugen implementieren und einrichten lässt.

Diese Aufgabe wird durch das holographische Informationsdisplay mit den Merkmalen des Patentanspruchs 1 und das Verfahren mit den Merkmalen des Patentanspruchs 16 gelöst.

Die Erfindung sieht hierzu vor:
ein holographisches Informations-Display in oder für ein Kraftfahrzeug zum Projizieren eines Bildes mit:
   - eine Datenverarbeitungeinrichtung zum Bereitstellen eines Hologramms für das zu projizierende virtuelle Anzeigenelement;
   - eine Steuereinrichtung, die für eine Mehrzahl von Ausschnitten des Hologramms jeweils ein individuelles Steuersignal ausgibt;
   - eine Lichtquelle zum Emittieren eines Lichtstrahls; und
   - eine Mehrzahl durch die Steuereinrichtung individuell einstellbarer optischer Phasenverzögerungszellen, die auf einer von dem Lichtstrahl ausgeleuchteten Fläche angeordnet sind, um den jeweils auf sie einfallenden Anteil des Lichtstrahls in der Phase ansprechend auf das jeweilige individuelle Steuersignal zu verzögern.

Ein erfindungsgemäßes Verfahren zum Projizieren eines Anzeigenelements unter Verwendung eines holographischen Informations-Displays, sieht die Schritte vor:
- Bereitstellen eines Hologramms für ein zwei- oder dreidimensionales virtuelles Anzeigenelement mittels einer Datenverarbeitungseinrichtung;
- Ausgeben von individuellen Steuersignalen für eine Mehrzahl von Abschnitten des Hologramms durch die Steuereinrichtung;
- Einstellen der jeweiligen Phasenverzögerung der Mehrzahl von Phasenverzögerungseinrichtungen ansprechend auf das jeweilige individuelle Steuersignal; und
- Ausleuchten der Mehrzahl von Phasenverzögerungseinrichtungen mittels der Lichtquelle, wodurch das virtuelle Anzeigenelement durch die phasenverzögerten Lichtstrahlen der Lichtquelle erzeugt wird.

Ein Vorteil des holographischen Informationsdisplays besteht darin, dass keine Korrekturoptiken benötigt werden, um die Anzeigenelemente in unverzerrter Form darzustellen. Als Maßnahme ist es hierfür bereits ausreichend das zugehörige Hologramm bereitzustellen.

In einem Bild ist die Intensität einer oder mehrerer Farben ortsaufgelöst dargestellt.

Bei einem Hologramm ist die Phase eines Lichtwellenfeldes mit einer oder mehreren Wellenlängen ortsaufgelöst in der Fläche des Hologramms dargestellt.

Nach dem Huyghensschen Prinzip ist die vollständige Kenntnis über ein Lichtwellenfeld in einer beliebigen Schnittfläche durch einen dreidimensionalen Raum bereits ausreichend, um das Lichtwellenfeld in dem dreidimensionalen Raum vollständig zu rekonstruieren. Die vollständige Kenntnis erfordert die Kenntnis über die Phase des Lichtwellenfeldes in der Schnittfläche.

Die Schnittfläche wird durch das Hologramm nachgebildet. Bei Beleuchtung geht von jedem Punkt des Hologramms eine Kugelwelle mit der von dem Hologramm vorgegebenen Anfangsphase aus. Die Superposition der einzelnen Elementarwellen ergibt das Lichtwellenfeld in dem Raum, das sogenannte rekonsturierte Hologramm. Das menschliche Auge nimmt die Phase nicht war. Die Superposition führt jedoch zu eindeutigen Interferenzmustern, deren Intensitätsverteilungen wahrnehmbar sind. Bei einer Reproduktion einer räumlichen Intensitätsverteilung kann anstelle der absoluten Phasen in einem Hologramm eine einfacher realisierbare relative Phase verwendet werden.

Die vollständige Rekonstruktion des Lichtwellenfeldes ist nicht von dem nachzubildenden Lichtwellenfeld unterscheidbar. Damit ergeben sich die gleichen Projektionsmuster auf die beiden Augen eines Betrachters und das damit verbundene dreidimensionale Sehen.

Das Anzeigenelement kann ein dreidimensionales Objekt oder einfach ein zweidimensionales darzustellendes Bild sein.

Das Hologramm zu dem Anzeigenelement, das heißt die ortsaufgelöste Phaseninformation, wird bereitgestellt. Diese kann entweder aktuell berechnet oder als Muster abgespeichert vorliegen.

Ein einfaches, dafür illustratives Berechnungsverfahren des Hologramms basiert im Prinzip darauf, dass von jedem Punkt des Anzeigenelements eine ausgehende Kugelwelle (Huyghenssche Elementarwelle) angenommen wird. Die Anfangsphase jeder Kugelwelle an dem virtuellen Anzeigenelement ist für helle Bereiche um 90° verschoben zu dunklen Bereichen zu wählen. Anschließend werden an jedem Punkt des Hologramms die Phasen der einzelnen an dem jeweiligen Punkt des Hologramms einfallenden Kugelwellen aufsummiert. Die aufsummierte Phase wird als Phase des Hologramms an dem jeweiligen Punkt abgespeichert. Bei der Propagation der Kugelwellen durch den Raum werden sämtliche verzerrenden optischen Elemente, z.B. Linsen, gekrümmte reflektierende Oberflächen, berücksichtigt. Gleichwohl werden Doppelreflektionen an Vorder- und Rückseite von Glasscheiben mit einbezogen. Nutzt man ein solches Hologramm, um das Lichtwellenfeld im Raum zu rekonstruieren, durchläuft das Lichtwellenfeld von dem Hologramm aus rückwärts die verzerrenden optischen Elemente, Doppelreflektionen, etc. und das virtuelle Anzeigenelement erscheint in gleicher Weise, wie es zur Bestimmung des Hologramms genutzt wurde. Bei Kenntnis des Raumes und der darin enthaltenen optischen Elemente kann somit eine verzerrungsfreie Abbildung des virtuellen Anzeigenelements alleinig durch die Bereitstellung des geeigneten Hologramms zu dem virtuellen Anzeigenelement erreicht werden.

Effizientere Berechnungsverfahren zur Bestimmung des Hologramms basieren auf einer Fouriertransformation des Raums. Der in diesen Berechungsverfahren enthaltene Grundgedanke bleibt jedoch unverändert.

In einer Weiterbildung ist das projizierte virtuelle Anzeigenelement durch eine Ablenkeinrichtung in den Sichtbereich eines Fahrers des Kraftfahrzeuges gerichtet. Eine entsprechende Ablenkeinrichtung kann die Frontscheibe des Fahrzeuges sein. Abbildungsfehler der optischen Ablenkeinrichtung können korrigierend in dem Hologramm berücksichtigt werden. Der Fahrer kann weiterhin durch die Frontscheibe während des Fahrens blicken und nimmt zugleich die ihm virtuell in das Sichtbereich eingeblendeten Anzeigenelemente war.

Die physische Realisierung des Hologramms erfolgt durch die Mehrzahl einstellbarer Phasenverzögerungszellen. Das einfallende Licht erfährt ortsaufgelöst eine definierte relative Phasenverzögerung.

Die Phasenverzögerungszellen können in Transmission oder in Reflektion betrieben werden.

Die Phasenverzögerungszellen können in Zeilen und Spalten angeordnet sein. Die Phasenverzögerungszellen können in einer ebenen oder gegebenenfalls auch auf einer gekrümmten Fläche angeordnet sein. Die vorhergehend beschriebene Schnittfläche durch den Raum muss nicht zwingenderweise eben sein. In einzelnen Ausgestaltungen kann es zweckmäßig sein, die Phasenverzögerungszellen auf gekrümmten Flächen oder zueinander verkippten Flächen anzuordnen.

In den Verzögerungszellen ist in einer Ausführungsform ein Verzögerungsmittel vorgesehen, durch welches die Phase des einfallenden Lichtstrahls zwischen 0 und 180 Grad in mindestens zwei Schritten verzögerbar ist. In der einfachsten Ausgestaltung können zwei Phasenverzögerungszellen so eingestellt werden, dass das aus ihnen jeweilig emittierte Licht gleichphasig oder gegenphasig ist. Der Kontrast und die Bildschärfe des dargestellten virtuellen Anzeigenelements korreliert mit der Genauigkeit, mit welcher die relativen Phasenunterschiede der Phasenverzögerungszellen einstellbar ist. Daher kann es vorteilhaft sein, ein Verzögerungsmittel bereitzustellen, das eine Einstellung der Phase in Bruchteilen von 180 Grad erreicht.

In einer weiteren Ausgestaltung kann die Phase des einfallenden Lichtstrahls kontinuierlich durch ein Verzögerungsmittel verzögert werden.

Eine Ausgestaltung sieht vor, das Verzögerungsmittel durch Flüssigkristalle und/oder ferroelektrische Flüssigkristalle bereitzustellen, die ansprechend auf ein durch das Steuersignal generiertes elektrisches Feld die Phase des einfallenden Lichts verzögern. Gegebenenfalls beinhaltet das Verzögerungsmittel Polarisationsfilter, um eine fest definierte Polarität der Lichtstrahlen zu gewährleisten und um Polarisationsdrehungen zu vermeiden.

Gemäß einer Weiterbildung sieht die Datenverarbeitungseinrichtung eine Berechnungseinrichtung zum Bestimmen des Hologramms für das zu projizierende virtuelle Anzeigenelement und/oder eine Speichereinrichtung zum Laden des Hologramms für das zu projizierende virtuelle Anzeigenelement vor. Die Datenverarbeitungseinrichtung kann in der Steuereinrichtung integriert sein.

In einer Ausgestaltung ist die Lichtquelle als kohärente Lichtquelle zum Emittieren eines kohärenten Lichtstrahls ausgebildet. Die Lichtquelle kann eine Laserlichtquelle sein. Die Kohärenzlänge sollte vorzugsweise mehrere Meter betragen. Neben Laserlichtquellen können unter Anderem auch Spektrallampen eingesetzt werden, deren Emissionsbandbreite ausreichend schmalbandig ist, um die geforderte Kohärenzlänge der Emission zu erreichen.

In einer Weiterbildung ist eine optische Strahlformungseinrichtung zwischen der Lichtquelle und der Fläche mit der Mehrzahl von Phasenverzögerungszellen zum gleichmäßigen Ausleuchten der Fläche angeordnet. Die Strahlformungseinrichtung umfasst vorzugsweise einen Raumfilter und ein oder mehrere Linsen.

Die Erfindung wird beispielhaft an vorteilhaften Ausführungsformen und den beigefügten Figuren erläutert. In den Figuren zeigen:
- Fig. 1: schematischer Aufbau eines holographischen Projektionssystems;
- Fig. 2: schematischer Aufbau eines einstellbaren diffraktiven Elements; und
- Fig. 3: schemtische Skizze einer Anordnung zum Einrichtungen einer Ausführungsform.

In den Figuren bezeichnen gleiche Bezugszeichen gleiche oder funktionsgleiche Elemente.

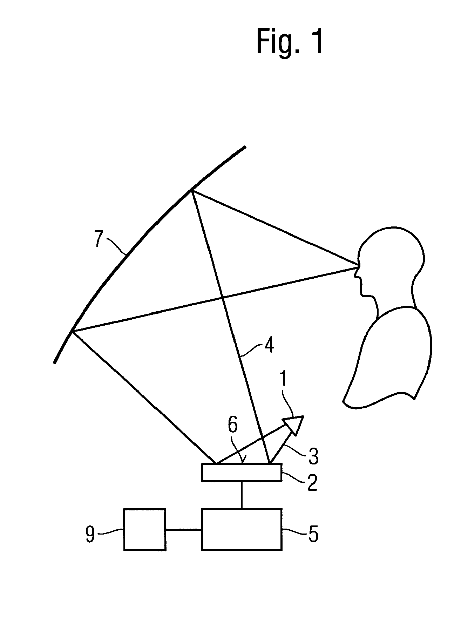

Eine bevorzugte Ausgestaltung des holographischen Informationsdisplays ist in Figur 1 schematisch dargestellt.

Eine kohärente Lichtquelle 1 emittiert vorzugsweise Licht einer einzigen Wellenlänge. Bevorzugt werden Laser, z.B. Laserdioden, als Lichtquelle 1 verwendet, da diese eine ausreichende Kohärenzlänge aufweisen. Gegebenenfalls werden der Lichtquelle 1 Raumfilter zum Ausfiltern unerwünschten Streulichts nachgeschaltet. Ein Raumfilter kann durch eine Lochblende realisiert werden, die sich im Brennpunkt zweier um sie angeordneter Linsen befindet. Dies ist jedoch rein optional.

Die Lichtquelle 1 beleuchtet ein ortsaufgelöst diffraktives Paneel 2. Das diffraktive Paneel 2 verzögert lokal unterschiedlich das reflektierte Licht 4 gegenüber dem ausfallenden Licht 3. Das diffraktive Paneel 2 wird von einer Steuereinrichtung 5 angesteuert. Die Steuereinrichtung 5 gibt vor, in welchen Bereichen der Oberfläche 6 das diffraktive Paneel 2 das reflektierte Licht 4 wie stark verzögert wird.

Die ortsaufgelöste Phasenverzögerung bildet ein Hologramm nach. Das Hologramm wird der Steuereinrichtung 5 durch eine Datenverarbeitungseinrichtung 9 in geeigneter Weise bereitgestellt. Das Hologramm wird vorzugsweise durch die Datenverarbeitungseinrichtung 9 aus einem vorgegebenen zwei- oder dreidimensionalen Modell eines Anzeigenelements ermittelt. Hierbei werden vorzugsweise auch die inneren Räumlichkeiten des Fahrzeuges berücksichtigt. Die Hologramme können ferner aus einem Speicher der Datenverarbeitungseinrichtung 9 geladen werden. In dem Speicher sind bereits typische einzublendende Texte oder Piktogramme abgelegt.

Das von dem diffraktiven Paneel 2 entsprechend dem Hologramm reflektierte Licht führt zu einem rekonstruierten Hologramm entsprechend dem zwei- oder dreidimensionalen Modell des Anzeigenelements, welches ein Betrachter, z.B. der Fahrer eines Fahrzeuges, als Modell wahrnehmen kann.

Die reflektierten Lichtstrahlen werden in Richtung einer Windschutzscheibe 7 des Fahrzeuges gelenkt und durch die Windschutzscheibe 7 in die Augen des Fahrers umgelenkt. Der Fahrer nimmt das rekonsturierte Hologramm als im Bereich der Windschutzscheibe 7 oder hinter der Windschutzscheibe war. Der wahrgenommen Abstand des rekonstruierten Hologramms zu der Windschutzscheibe ist durch das Hologramm vorgegeben. Durch eine Anpassung des Hologramms kann der wahrgenommene Abstand variiert werden.

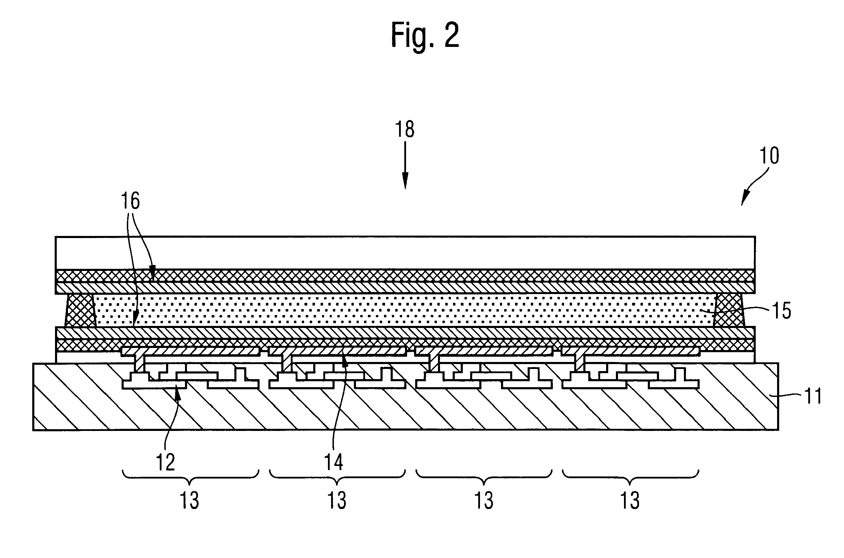

Ein möglicher Aufbau eines diffraktiven Paneels 10 ist in Figur 2 gezeigt. In einem Halbleitersubstrat 11 sind eine Mehrzahl von individuell ansteuerbaren Elektroden 12 implementiert, welche das Paneel 10 in Zellen 13 unterteilen. Oberhalb der Elektroden 12 sind Spiegel 14 zum Reflektieren von einfallenden Lichtstrahlen angeordnet. Oberhalb der Spiegel 14 ist eine Schicht 15 mit einem Flüssigkristallmaterial aufgebracht. Das Flüssigkristallmaterial kann ferroelektrisches Flüssigkristallmaterial enthalten.

Das Licht fällt aus einer Richtung 18 auf das diffraktive Paneel ein. Dabei durchläuft das Licht die Flüssigkristallschicht 15 und wird durch die Spiegelelemente 14 wieder zurückreflektiert. Die Anordnung kann in senkrechtem Einfall oder unter schrägem Einfall verwendet werden. Das einfallende Licht erfährt eine Phasenverzögerung beim Durchlaufen der Flüssigkristallschicht 15. Die Phasenverzögerung wird durch Anlegen eines elektrischen Potentials an die Elektroden 12 eingestellt.

In einer einfachen Variante können an die Elektroden 12 genau zwei unterschiedliche elektrische Signale angelegt werden, die zu einer ersten Phasenverzögerung und zu einer um 180 Grad gegen über der ersten Phasenverzögerung erhöhten Phasenverzögerung führen.

In anderen Ausgestaltungen können an die Elektroden 12 gestufte Spannungspegel angelegt werden, so dass relative Phasenverzögerungen von Bruchteilen von 180 Grad realisierbar sind.

Vorzugsweise sind oberhalb und/oder unterhalb der Flüssigkristallschicht Polarisationsfilter angeordnet. Diese filtern unerwünschte Polarisationszustände aus. Anstelle der Polarisationsfilter können auch Polstrahlteiler verwendet werden, die eine Polarisationsebene reflektieren und die andere Polarisationsebene transmittieren.

Beim Bestimmen des Hologramms wird auch der optische Weg der Lichtwellenfelder durch das Fahrzeuginnere berücksichtigt. Insbesondere wird das Hologramm die Oberflächenkontur der Windschutzscheibe 7 und gegebenenfalls auch an die Dicke der Windschutzscheibe 7 oder gar das Dickenprofil der Windschutzscheibe 7 angepasst. Auf diese Weise sieht der Fahrer ein unverzerrtes virtuelles Anzeigenelement. Die Anpassung des Hologramms und des Anzeigenelements wird ohne Anpassung von optischen Elementen, wie Linsen, Spiegeln, etc. erreicht. Es ist alleinig ausreichend neue Hologramme einzuprogrammieren, gemäß welchen das einstellbare diffraktive Paneel 2 angesteuert wird.

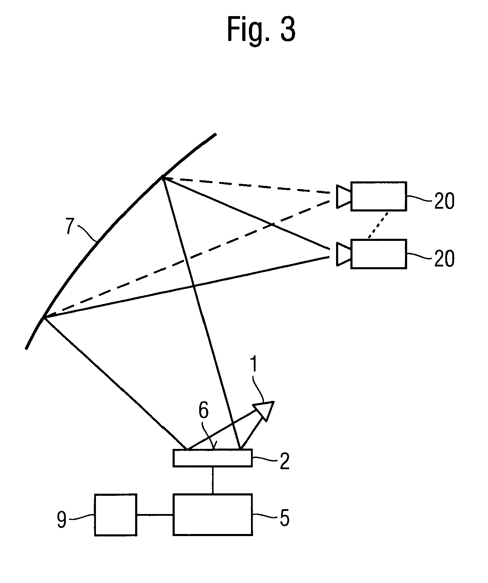

Die Einrichtung der Hologramme kann bei der erstmaligen Installation des diffraktiven Paneels erfolgen. Das Einrichten kann mit einer in Figur 3 dargestellten Anordnung erfolgen. Vorzugsweise werden mehrere Hologramme zugehörig zu Testmustern rekonstruiert. Die Hologramme mit Testmustern können durch die Datenverarbeitungseinrichtung 9 bereitgestellt und mittels des diffraktiven Paneels 3 und der Lichtquelle rekonstruiert werden. Anhand der rekonstruierten Hologramme und damit der dargestellten Testmuster können räumliche Abweichungen in dem Fahrzeug, z.B. der Form der Windschutzscheibe 7 ausgemessen werden.

Eine Aufzeichnung der Test-Hologramme erfolgt durch eine Kamera 20. Die Kamera wird vorzugsweise in verschiedene vorbestimmte Positionen verfahren, aus denen das oder die rekonstruierten Hologramme aufgezeichnet werden. Durch eine Auswertungseinrichtung werden die aufgenommenen rekonstruierten Hologramme an den jeweiligen Positionen mit Vorgaben verglichen, um die Abweichungen zu bestimmen.

Die vorgenommenen Anpassungen werden als Fahrzeugparameter abgespeichert. Bei der Berechnung oder Bereitstellung von Hologrammen für virtuelle Anzeigenelemente werden diese Fahrzeugparameter berücksichtigt. Die Hologramme werden entsprechend modifiziert. Hierdurch kann auf den Einsatz von Korrekturlinsen oder -spiegel zum Anpassen der Projektionssystems an verschiedene Fahrzeuge verzichtet werden.

## Patentansprüche

1. Holographisches Informationsdisplay in oder für ein Kraftfahrzeug zum Projizieren eines virtuellen Anzeigenelements, mit einer Datenverarbeitungseinrichtung (9) zum Bereitstellen eines Hologramms für das zu projizierende virtuelle Anzeigenelement; einer Steuereinrichtung (5), die für eine Mehrzahl von Ausschnitten des Hologramms jeweils ein individuelles Steuersignal ausgibt; eine Lichtquelle (1) zum Emittieren eines Lichtstrahls; und einer Mehrzahl durch die Steuereinrichtung (5) individuell einstellbarer optischer Phasenverzögerungszellen (13), die auf einer von dem Lichtstrahl ausgeleuchteten Fläche angeordnet sind, um den jeweils auf sie einfallenden Anteil des Lichtstrahls in der Phase ansprechend auf das jeweilige individuelle Steuersignal zu verzögern.

2. Holographisches Informationsdisplay nach Anspruch 1, **dadurch gekennzeichnet, dass** die Phasenverzögerungszellen in Transmission betrieben sind.

3. Holographisches Informationsdisplay nach Anspruch 1, **dadurch gekennzeichnet, dass** die Phasenverzögerungszellen (13) in Reflektion betrieben sind.

4. Holographisches Informationsdisplay nach einem der vorhergehenden Ansprüche, **dadurch gekennzeichnet, dass** die Phasenverzögerungszellen (13) in Zeilen und Spalten angeordnet sind.

5. Holographisches Informationsdisplay nach einem der vorhergehenden Ansprüche, **dadurch gekennzeichnet, dass** die Phasenverzögerungszellen (13) auf einer ebenen oder einer gekrümmten Fläche angeordnet sind.

6. Holographisches Informationsdisplay nach einem der vorhergehenden Ansprüche, **dadurch gekennzeichnet, dass** ein Verzögerungsmittel in den Phasenverzögerungszellen (13) vorgesehen ist, durch welches die Phase des einfallenden Lichtstrahls zwischen 0 Grad und 180 Grad in mindestens zwei Schritten verzögerbar ist.

7. Holographisches Informationsdisplay nach einem der vorhergehenden Ansprüche, **dadurch gekennzeichnet, dass** ein Verzögerungsmittel in den Phasenverzögerungszellen (13) vorgesehen ist, durch welches die Phase des einfallenden Lichtstrahls zwischen 0 Grad und 180 Grad kontinuierlich verzögerbar ist.

8. Holographisches Informationsdisplay nach einem der Ansprüche 6 und 7, **dadurch gekennzeichnet, dass** das Verzögerungsmittel durch Flüssigkristalle und/oder ferroelektrische Flüssigkristalle gebildet ist, die ansprechend auf ein durch das Steuersignal generiertes elektrisches Feld die Phase des einfallenden Lichtstrahls verzögern.

9. Holographisches Informationsdisplay nach einem der vorhergehenden Ansprüche, **dadurch gekennzeichnet, dass** die Datenverarbeitungseinrichtung (28) eine Berechnungseinrichtung zum Bestimmen des Hologramms für das zu projizierende virtuelle Anzeigenelement und/oder eine Speichereinrichtung zum Laden des Hologramms für das zu projizierende virtuelle Anzeigenelement aufweist.

10. Holographisches Informationsdisplay nach einem der vorhergehenden Ansprüche, **dadurch gekennzeichnet, dass** die Datenverarbeitungseinrichtung (6) in der Steuereinrichtung (5) integriert ist.

11. Holographisches Informationsdisplay nach einem der vorhergehenden Ansprüche, **dadurch gekennzeichnet, dass** die Lichtquelle als kohärente Lichtquelle (1) zum Emittieren eines kohärenten Lichtstrahls ausgebildet ist.

12. Holographisches Informationsdisplay nach einem der vorhergehenden Ansprüche, **dadurch gekennzeichnet, dass** die Lichtquelle eine Laserlichtquelle ist.

13. Holographisches Informationsdisplay nach einem der vorhergehenden Ansprüche, **dadurch gekennzeichnet, dass** eine optische Strahlformungseinrichtung zwischen der Lichtquelle und der Fläche mit der Mehrzahl von Phasenverzögerungszellen (13) zum gleichmäßigen Ausleuchten der Fläche angeordnet ist.

14. Holographisches Informationsdisplay nach einem der vorhergehenden Ansprüche, **dadurch gekennzeichnet, dass** das projizierte virtuelle Anzeigenelement durch eine Ablenkeinrichtung in den Sichtbereich eines Fahrers des Kraftfahrzeuges gerichtet ist.

15. Holographisches Informationsdisplay nach Anspruch 14, **dadurch gekennzeichnet, dass** die Ablenkeinrichtung (7) die Frontscheibe des Fahrzeuges ist.

16. Verfahren zum Projizieren eines virtuellen Anzeigenelements unter Verwendung eines holographischen Informationsdisplays nach einem der Ansprüche 1 bis 15, mit den Schritten:
Bereitstellen eines Hologramms für ein zwei- oder dreidimensionalen virtuellen Anzeigenelements mittels der Datenverarbeitungseinrichtung (9);
Ausgeben von individuellen Steuersignalen für eine Mehrzahl von Abschnitten des Hologramms durch die Steuereinrichtung (5);
Einstellen der jeweiligen Phasenverzögerung der Mehrzahl von Phasenverzögerungszellen (13) ansprechend auf das jeweilige individuelle Steuersignal; und
Ausleuchten der Mehrzahl von Phasenverzögerungszellen (13) mittels der Lichtquelle, wodurch das virtuelle Anzeigenelement durch die phasenverzögerten Lichtstrahlen der Lichtquelle erzeugt wird.

17. Verfahren nach Anspruch 16, wobei die durch das Hologramm phasenverzögerten Lichtstrahlens durch die optische Ablenkeinrichtung in den Sichtbereich des Fahrers abgelenkt werden.

18. Verfahren nach Anspruch 17, **dadurch gekennzeichnet, dass** Abbildungsfehler der optischen Ablenkeinrichtung korrigierend in dem Hologramm berücksichtigt werden.
